# NEUE EUROPÄISCHE PATENTSCHRIFT

(11) **EP 0 364 617 B2**
(45) Veröffentlichungstag und Bekanntmachung des Hinweises auf die Entscheidung über den Einspruch: **12.04.1995**
(45) Hinweis auf die Patenterteilung: 03.06.1992
(21) Anmeldenummer: 88117310.8
(22) Anmeldetag: 18.10.1988
(51) Int. Cl.: B01D 53/86, F28D 9/00

(54) **Vorrichtung zum Entsticken von Kraftwerksabgasen**
Apparatus for dispersing exhaust gases from a power station
Dispositif de dénitration des gaz d'échappement d'une centrale

(43) Veröffentlichungstag der Anmeldung: 25.04.1990
(73) Patentinhaber: Balcke-Dürr AG, D-40882 Ratingen (DE); VEBA KRAFTWERKE RUHR AKTIENGESELLSCHAFT, 45896 Gelsenkirchen (DE)
(72) Erfinder: Eggers, Hans Jürgen, Dipl.-Ing., D-4270 Dorsten (DE); Daschmann, Horst, D-4030 Ratingen 1 (DE)
(74) Vertreter: Stenger, Watzke & Ring Patentanwälte

(56) Entgegenhaltungen:
- DE-A- 3 335 917
- DE-A- 3 431 961
- DE-A- 3 442 967

## Beschreibung

Die Erfindung betrifft eine Vorrichtung zum Entsticken von vorzugsweise aus einer Rauchgas-Entschwefelungs-Anlage kommenden Kraftwerksabgasen mit Wärmeaustausch zwischen den entstickten Gasen und den Kraftwerksabgasen in einem im Kreuz-Gegenstrom betriebenen Wärmetauscher mit Zufuhr von Zusatzwärme zur Aufheizung der zu entstickenden Gase auf die für den Katalysatorprozeß erforderliche Temperatur und mit einer Dosiereinrichtung für die Eindüsung von Ammoniak.

Bei einem Antrag der Stadtwerke Braunschweig auf Erteilung eines Vorbescheides für eine Rauchgasentstickungsanlage ist eine derartige Vorrichtung bekannt, bei der der Wärmetauscher einen Aufheizteil aufweist, an dem sich ein Entstickungsteil anschließt, in dessen Bereich die Heizvorrichtung für die Zufuhr von Zusatzwärme sowie die Dosiervorrichtung für die Ammoniakeindüsung angeordnet sind.

Ausgehend von einer derartigen Konstruktion liegt der Erfindung die **Aufgabe** zugrunde, eine Entstickungsvorrichtung zu schaffen, die bei gutem Entstickungsgrad kompakt ist und eine gute Zugänglichkeit zu den Wartungsarbeiten erfordernden Bauteilen aufweist.

Zur **Lösung** dieser Aufgabenstellung durch die Erfindung ist der Aufheizteil als Plattenwärmetauscher mit sowohl nebeneinanderliegend als auch hintereinanderliegend geschalteten Wärmetauscherelementen ausgebildet und der Entstickungsteil unmittelbar auf dem Aufheizteil angeordnet, wobei dieser Entstickungsteil jeweils eine das Ende des zugehörigen Austrittskanals des Plattenwärmetauschers U-förmig umgebende und mit den Anfängen der entsprechenden, beidseitig zum Austrittskanal angeordneten Rückströmkanäle des Plattenwärmetauschers verbindende Umlenkhaube umfaßt und wobei innerhalb dieser Umlenkhaube die Katalysatoren in den Rückströmkanälen des Entstickungsteils in derselben Ebene wie die im Austrittskanal liegenden Heizvorrichtungen sowie die Dosiervorrichtung angeordnet sind.

Die erfindungsgemäß ausgeführte Entstickungsvorrichtung weist den Vorteil auf, trotz eines geringen Bauvolumens und kurzer Leitungen für die zu entstickenden Gase und für die Kraftwerksabgase eine leichte Zugänglichkeit zu jenen Bauteilen zu ermöglichen, an denen Wartungsarbeiten erforderlich sind. Infolge des kleinen Bauvolumens weist die Vorrichtung nur geringe freie Oberflächen auf, so daß Wärmeverluste vermieden und der energetische Wirkungsgrad verbessert werden, wozu auch die Verwendung eines besonders kompakten Plattenwärmetauschers beiträgt. Das sich am Austritt des Plattenwärmetauschers einstellende Temperaturprofil ist nahezu ausgeglichen, weshalb zusätzliche Mischstrecken entfallen und eine Umlenkung der Gasströme auf keinem Raum möglich ist. Der Plattenwärmetauscher läßt sich aus einzelnen Modulen aufbauen, was eine einfache Anpassung an die jeweils geforderte Leistung und Größe der Entstickungsanlage ermöglicht. Bedingt durch den kompakten Aufbau der Entstickungsanlage wird keine Einhausung benötigt, so daß sich die Anlage als ganzes im Freien aufstellen läßt.

Gemäß einer Weiterbildung der Erfindung ist die Vorrichtung in mehrere Baugruppen unterteilt, die einzeln zu- und abschaltbar sind. Auf diese Weise kann die Entstickungsanlage durch Abschaltung einzelner Kammern auch im Teillastbereich betrieben werden. Die Abschaltung einzelner Kammern erleichtert auch die Durchführung von Reparaturen, sowie Wartungs- und Reinigungsarbeiten.

Gemäß einem weiteren Merkmal der Erfindung ist die Heizvorrichtung für die Zufuhr der Zusatzwärme als dampfbeheizter Gasvorwärmer ausgebildet, der vor der Ammoniakeindüsung im Austrittskanal des Plattenwärmetauschers angeordnet ist. Dadurch wird am Ende des Austrittskanals und vor dem Eintritt in den Katalysator ein gleichmäßiges Temperaturprofil über dem Strömungsquerschnitt erzeugt. Im Gegensatz zur Verwendung von Zusatzbrennern fallen keine zusätzlichen Abgase an, wodurch sich der Entstickungsgrad verbessert.

Zur Vergleichmäßigung der umgelenkten Rohgasströmung ist es außerdem von Vorteil, in der Umlenkhaube Mischeinrichtungen anzuordnen, beispielsweise durch Einbau von Wirbeleinbauflächen.

Bei einer weiteren Ausgestaltung der Erfindung ist die Umlenkhaube mit einem dem Querschnitt der Katalysatoren entsprechenden Strömungsquerschnitt ausgebildet und weist eine mindestens der zweifachen Eintrittabreite entsprechende Länge auf. Auf diese Weise wird trotz kompaktem Aufbau eine ausreichend lange Mischstrecke erzeugt, außerdem bleiben die Druckverluste infolge des Wegfalls von Einschnürungen gering.

Schließlich wird mit der Erfindung vorgeschlagen, die Rückströmkanäle für das Reingas innerhalb des Plattenwärmetauschers geradlinig durchlaufend auszubilden. Dadurch sind die Reingaskanäle besser zu reinigen, insbesondere für die von Zeit zu Zeit notwendig werdende Beseitigung von Ammoniumbisulfat.

Auf der Zeichnung ist ein Ausführungsbeispiel anhand einer teilweise geschnittenen, perspektivischen Ansicht einer Vorrichtung zum Entsticken von Kraftwerksabgasen dargestellt.

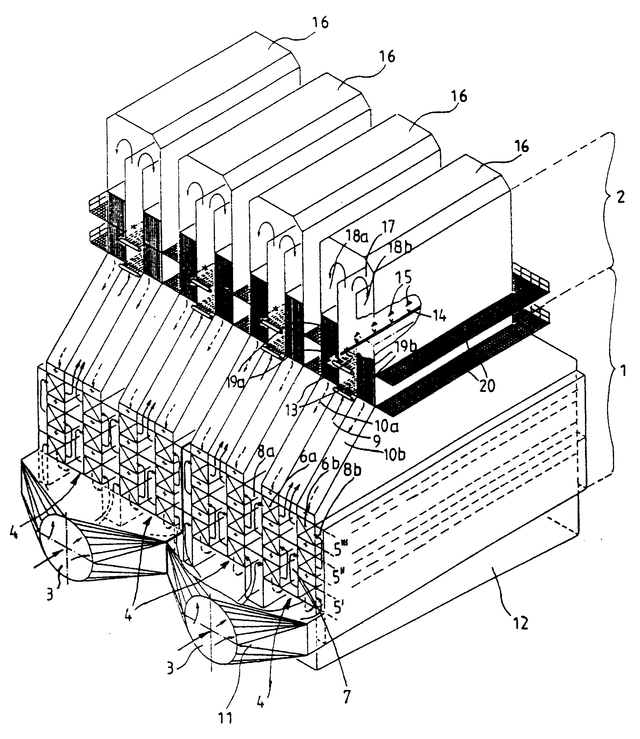

Die Vorrichtung zum Entsticken von insbesondere aus einer Rauchgas-Entschwefelungs-Anlage kommenden Krattwerksabgasen setzt sich aus zwei Baugruppen zusammen: einem Aufheizteil 1 sowie einem darüber angeordneten Entstickungsteil 2. Sowohl Aufheizteil 1 als auch Entstickungsteil 2 setzen sich beim Ausführungsbeispiel aus vier Baugruppen zusammen, wobei jeweils zwei Baugruppen, wie im unteren Teil der Figur 1 zu erkennen ist, über einen gemeinsamen Stutzen 3 mit dem von einem Kraftwerk herangeführten, zu entstickenden Rohgas beaufschlagt werden. An die beiden Stutzen 3 schließt sich jeweils ein Verteiler 11 an. Über zwei weitere, in der Zeichnung nur teilweise dargestellte Sammler 12 mit an der Rückseite der Vorrichtung ausgebildeten Stützen verläßt das entstickte Gas, im folgenden als "Reingas" bezeichnet, den Aufheizteil 1 der Vorrichtung.

Der Aufheizteil 1 setzt sich entsprechend den vier Baugruppen der Vorrichtung aus vier Plattenwärmetauschern 4 zusammen. Zur Vereinfachung der Figurenbeschreibung sind die im folgenden verwendeten Bezugszeichen nur an der in der Zeichnung rechts angeordneten Baugruppe eingetragen; sie gelten jedoch in gleicher Weise für die übrigen drei Baugruppen.

Jeder Plattenwärmetauscher 4 setzt sich aus drei übereinander angeordneten Wärmetauscherstufen 5', 5'', 5''' zusammen. Jede Wärmetauscherstufe 5', 5'', 5''' besteht aus zwei Wärmetauschelementen 6a, 6b, die jeweils paarweise auf gleicher Höhe und mit Abstand zueinander angeordnet sind. Der Übersichtlichkeit wegen sind nur die Wärmetauschelemente 6a, 6b der obersten Wärmetauscherstufe 5''' bezeichnet.

Der Plattenwärmetauscher 4 wird im Kreuz-Gegenstrom durchströmt, wobei das senkrecht nach unten abströmende, heiße Reingas die jeweils übereinander angeordneten Wärmetauschelemente 6a bzw. 6b geradlinig durchströmt, während das aufzuheizende Rohgas die Wärmetauschelemente 6a, 6b im rechten Winkel hierzu durchströmt. Das über die Stutzen 3 zuströmende Rohgas gelangt zuerst auf die Außenseite der unteren Wärmetauscherstufe 5', durchströmt deren Wärmetauschelemente nach innen in eine gemeinsame Sammelkammer 7, steigt in dieser Sammelkammer 7 auf die Höhe der mittleren Wärmetauscherstufe 5'' auf und durchströmt deren Wärmetauschelemente nach außen hin. Das die Wärmetauschelemente der mittleren Wärmetauscherstufe 5'' verlassende Rohgas gelangt in außen angeordnete, weitere Sammelkammern 8a, 8b, in denen das Rohgas in den Bereich der oberen Wärmetauscherstufe 5''' aufsteigt und deren Wärmetauschelemente 6a, 6b nach innen hin durchströmt. Das aufgeheizte Rohgas gelangt anschließend über einen Austrittskanal 9, der beim Ausführungsbeispiel in Form eines sich verjüngenden Trapezes gestaltet ist, in den Entstikkungsteil 2 der Vorrichtung.

Beidseitig an den Austrittskanal 9 schließen sich in gleicher Weise gestaltete Rückströmkanäle 10a, 10b an, über die das aus dem Entstickungsteil 2 zurückströmende Reingas in den Plattenwärmetauscher 4 gelangt, um im Kreuz-Gegenstrom das Rohgas aufzuheizen. Die Rückströmkanäle 10a, 10b verlaufen in der gleichen vertikalen Ebene, in der sich auch die Wärmetauschelemente der einzelnen Wärmetauscherstufen 5, 5'', 5''' befinden, so daß das entstickte Gas die Wärmetauschelemente umlenkungsfrei in vertikaler Richtung durchströmt. Das aus der untersten Wärmetauscherstufe 5' austretende Reingas gelangt in einen jeweils zwei Baugruppen zugeordneten, gemeinsamen Sammler 12 und von dort über einen Schornstein ins Freie.

Die Temperatur des aus dem Entstickungsteil 2 in den Plattenwärmetauscher 4 zurückströmenden Reingases beträgt am Eintritt ca. 320 °C und am Austritt ca. 85 bis 90 °C. Entsprechend wird das hierzu im Kreuz-Gegenstrom geführte, von der Rauchgas-Entschwefelungs-Anlage kommende Rohgas von einer Eintrittstemperatur von ca. 55 bis 60 °C auf eine Temperatur von ca. 290 °C im Austrittskanal 9 aufgeheizt.

Der Entstickungsteil 2 jeder der vier Baugruppen setzt sich aus drei parallel zueinander verlaufenden Kanälen zusammen. Der mittlere, oben offene Kanal bildet eine Verlängerung des Austrittskanales 9 und ist unter anderem mit einer, aus zwei übereinander angeordneten Heizflächen gebildeten Heizvorrichtung 13 versehen, mittels derer das den Plattenwärmetauscher 4 mit ca. 290 °C verlassende Rohgas auf die für einen Katalysatorbetrieb notwendige Temperatur von ca. 320 °C aufgeheizt wird. Oberhalb der Heizvorrichtung 13 ist eine Ammoniak-Einspeiseleitung 14 mit einzelnen Austrittsdüsen angeordnet, durch die dem aufsteigenden Rohgasstrom Ammoniak zugesetzt wird. Die Ammoniakeinspeisung kann auch unterhalb oder innerhalb der Heizvorrichtung 13 erfolgen. Oberhalb der jeweiligen Austrittsdüsen der Ammoniak-Einspeiseleitung 14 angeordnete Wirbeleinbauten 15 bewirken eine gute Verteilung des Ammoniaks über dem Strömungsquerschnitt.

Den oberen Abschluß des Entstickungsteils 2 jeder Baugruppe bildet jeweils eine Umlenkhaube 16. Die in etwa die Form eines nach unten offenen U aufweisende Umlenkhaube 16 umgibt mit Abstand die obere Öffnung 17 des Austrittskanals 9, so daß das aus dem Austrittskanal 9 austretende Rauchgas um 180 ° nach außen umgelenkt wird und in zwei außenliegende, als Verlängerung der Rückströmkanäle 10a, 10b ausgebildete Entstikkungskanäle 18a, 18b gelangt, die außenseitig durch die Seitenwände der Umlenkhaube 16 begrenzt werden.

In den Entstickungskanälen 18a, 18b sind Katalysatoren 19a, 19b zur Entstickung der heißen, mit Ammoniak angereicherten Rauchgase angeordnet. Zur unterstützung der Wirkung der Wirbeleinbauten 15 können oberhalb der Katalysatoren 19a, 19b weitere Mischeinrichtungen vorgesehen sein, um eine Vergleichmäßigung der in der Umlenkhaube 16 umgelenkten Rohgasströmung zu bewirken. Das aus den Katalysatoren 19a, 19b austretende, entstickte Rauchgas gelangt anschließend über die Rückströmkanäle 10a, 10b zurück in den Plattenwärmetauscher 4.

Die Heizvorrichtungen 13 sind vorzugsweise als dampfbeheizte Gasvorwärmer ausgeführt und in einer Ebene mit den Katalysatoren 19a, 19b angeordnet. Auf diese Weise sind diese wartungsintensiven Bauteile gut zugänglich, zumal in den entsprechenden Ebenen Arbeitsplattformen 20 um die Umlenkhauben 16 herum montiert sind.

Der durch die Breite der Umlenkhaube 16 bestimmte Strömungsquerschnitt der Entstickungskanäle 18a, 18b ist auf den Querschnitt der Katalysatoren 19a, 19b abgestimmt, wobei die Länge der Umlenkhaube 16 mindestens dem zweifachen Querschnitt der oberen Öffnung 17 des Austrittskanals 9 entspricht, um eine ausreichend lange Mischstrecke vor den Katalysatoren 19a, 19b zu erhalten und Druckverluste infolge von Einschnürungen gering zu halten

### Bezugszeichenliste:

- 1: Aufheizteil
- 2: Entstickungsteil
- 3: Stutzen
- 4: Plattenwärmetauscher
- 5': Wärmetauscherstufe
- 5'': Wärmetauscherstufe
- 5''': Wärmetauscherstufe
- 6a: Wärmetauschelement
- 6b: Wärmetauschelement
- 7: Sammelkammer
- 8a: Sammelkammer
- 8b: Sammelkammer
- 9: Austrittskanal
- 10a: Rückströmkanal
- 10b: Rückströmkanal
- 11: Verteiler
- 12: Sammler
- 13: Heizvorrichtung
- 14: Ammoniak-Einspeiseleitung
- 15: Wirbeleinbauten
- 16: Umlenkhaube
- 17: obere Öffnung
- 18a: Entstickungskanal
- 18b: Entstickungskanal
- 19a: Katalysator
- 19b: Katalysator
- 20: Arbeitsplattform

## Patentansprüche

1. Vorrichtung zum Entsticken von vorzugsweise aus einer Rauchgas-Entschwefelungs-Anlage kommenden Kraftwerksabgasen mit Wärmeaustausch zwischen den entstickten Gasen und den Kraftwerksabgasen
in einem im Kreuz-Gegenstrom betriebenen Wärmetauscher, mit Zufuhr von Zusatzwärme zur Aufheizung der zu entstickenden Gase auf die für den Katalysatorprozeß erforderliche Temperatur und mit einer Dosiereinrichtung für die Eindüsung von Ammoniak,
mit einem den Wärmetauscher aufweisenden Aufheizteil (1), welcher als Plattenwärmetauscher (4) mit sowohl nebeneinanderliegend als auch hintereinanderliegend geschalteten Wärmetauscherelementen (6a,6b) ausgebildet ist,
und mit einem unmittelbar auf dem Aufheizteil (1) angeordneten Entstickungsteil (2),
der jeweils eine das Ende des zugehörigen Austrittskanals (9) des Plattenwärmetauschers (4) U-förmig umgebende und mit den Anfängen der entsprechenden, beidseitig zum Austrittskanal (9) angeordneten Rückströmkanäle (10a,10b) des Plattenwärmetauschers (4) verbindende Umlenkhaube (16) umfaßt,
wobei im Bereich des Entstickungsteils (2) im Austrittskanal (9) die Heizvorrichtung (13) für die Zufuhr von Zusatzwärme sowie die Dosiervorrichtung (14) für die Ammoniakeindüsung
und in derselben Ebene des Entstickungsteils (2) in den Rückströmkanälen (10a,10b) die Katalysatoren (19a,19b) angeordnet sind.

2. Vorrichtung nach Anspruch 1, gekennzeichnet durch die Unterteilung in mehrere Baugruppen, die einzeln zu- und abschaltbar sind.

3. Vorrichtung nach Anspruch 1 oder 2, dadurch gekennzeichnet, daß die Heizvorrichtung für die Zufuhr der Zusatzwärme als dampfbeheizter Gasvorwärmer (13) ausgebildet ist, der vor der Ammoniakeindüsung (14) im Austrittskanal (9,21) des Plattenwärmetauschers (4) angeordnet ist.

4. Vorrichtung nach Anspruch 1 bis 3, dadurch gekennzeichnet, daß in der Umlenkhaube (16) Mischeinrichtungen (15,25) zur Vergleichmäßigung der umgelenkten Rohgasströmung angeordnet sind.

5. Vorrichtung nach Anspruch 4, dadurch gekennzeichnet, daß die Mischeinrichtung (15) durch Wirbeleinbauflächen gebildet ist.

6. Vorrichtung nach mindestens einem der Ansprüche 1 bis 5, dadurch gekennzeichnet, daß die Umlenkhaube (16) mit einem dem Querschnitt der Katalysatoren (19a,19b) entsprechenden Strömungsquerschnitt ausgebildet ist und eine mindestens der zweifachen Eintrittsbreite entsprechende Länge aufweist.

7. Vorrichtung nach mindestens einem der Ansprüche 1 bis 6, dadurch gekennzeichnet, daß Rückströmkanäle (10a,10b) für das Reingas innerhalb des Plattenwärmetauschers (4) geradlinig durchlaufend ausgebildet sind.

## Claims

1. Apparatus for the denitrogenisation of power station flue gases, more particularly those originating from a flue gas desulphurisation plant, comprising: heat exchange between the denitrogenised gases and the power station flue gases in a cross countercurrent heat exchanger; a supply of supplementary heat to heat the gases for denitrogenisation to the temperature required for the catalyst process and metering means for the injection of ammonia;
a heating part (1) in which the heat exchanger is disposed and which is in the form of a plate heat exchanger (4) having heat exchanger elements (6a, 6b) connected both in parallel and in series;
and a denitrogenising part (2) disposed directly on the heating part (1),
the denitrogenising part (2) having a deflecting hood (16) which extends in a U around the end of each associated outlet duct (9) of the plate heat exchanger (4) and connects such end to the starts of the corresponding heat exchanger return flow ducts (10a, 10b) disposed on either side of the outlet duct (9),
the heating means (13) for the supply of supplementary heat and the metering means (14) for the ammonia injection being disposed in the outlet duct (9) near the denitrogenising part (2),
the catalysts (19a, 19b) being so disposed in the return flow ducts (10a, 10b) as to be coplanar with the denitrogenising part (2).

2. Apparatus according to claim 1, characterised by sub-division into a number of sub-assemblies which can be brought into and out of operation individually.

3. Apparatus according to claim 1 or 2, characterised in that the heating means for the supply of supplementary heat is constructed as a steam-heated gas preheater (13) disposed upstream of the ammonia injection (14) in the outlet duct (9, 21) of the plate heat exchanger (4).

4. Apparatus according to claims 1 to 3, characterised in that the deflecting hood (16) contains mixing means (15, 25) for rendering the deflected crude gas flow uniform.

5. Apparatus according to claim 4, characterised in that the mixing means (15) is formed by built-in turbulence-producing surfaces.

6. Apparatus according to at least any one of claims 1 to 5, characterised in that the deflecting hood (16) has a flow cross-section corresponding to the cross-section of the catalysts (19a, 19b) and has a length equal to at least twice the entry width.

7. Apparatus according to at least one of claims 1 to 6, characterised in that continuous straight return flow ducts (10a, 10b) for the pure gas are disposed in the plate heat-exchanger (4).

## Revendications

1. Dispositif pour effectuer la dénitration de gaz d'échappement d'une centrale, de préférence en provenance d'une installation de désulfuration des gaz de fumées, comprenant un échange de chaleur entre les gaz dénitrés et les gaz d'échappement de la centrale, dans un échangeur de chaleur fonctionnant selon des courants opposés et croisés, l'amenée de chaleur additionnelle pour réchauffer les gaz à dénitrer à la température nécessaire au processus catalytique, ainsi qu'un dispositif de dosage pour l'injection d'ammoniac, le dispositif comportant également une partie de chauffage (1) comprenant l'échangeur de chaleur, qui est réalisé en tant qu'échangeur de chaleur à plaques (4) qui comporte des éléments d'échange de chaleur (6a, 6b) disposés aussi bien côte à côte que les uns à la suite des autres, ainsi qu'une partie de dénitration (2), qui est disposée directement sur la partie de chauffage (1), et qui, pour chaque canal de sortie (9), comprend un capot de renvoi (16) reliant le canal de sortie (9) associé de l'échangeur de chaleur à plaques (4), qu'il entoure à la manière d'un "U", aux débuts des canaux d'écoulement de retour (10a, 10b) de l'échangeur de chaleur à plaques (4) situés de part et d'autre du canal de sortie (9) considéré, le dispositif de chauffage (13) pour l'amenée de chaleur additionnelle, ainsi que le dispositif de dosage (14) pour l'injection d'ammoniac étant disposés dans la zone de la partie de dénitration (2), dans le canal de sortie (9), et les réacteurs catalytiques (19a, 19b) étant disposés dans le même plan de la partie de dénitration (2), dans les canaux d'écoulement de retour (10a, 10b).

2. Dispositif selon la revendication 1, caractérisé par la subdivision en plusieurs modules qui peuvent être mis en service et à l'arrêt, individuellement.

3. Dispositif selon la revendication 1 ou 2, caractérisé en ce que le dispositif de chauffage (13) pour l'amenée de chaleur additionnelle est réalisé sous la forme d'un réchauffeur de gaz (13) chauffé à la vapeur, qui est disposé en amont de l'injection d'ammoniac (14) dans le canal de sortie (9, 21) de l'échangeur de chaleur à plaques (4).

4. Dispositif selon l'une des revendications 1 à 3, caractérisé en ce que dans le capot de renvoi (16) sont disposés des dispositifs mélangeurs (15, 25) pour uniformiser l'écoulement de gaz brut ayant subi le renvoi.

5. Dispositif selon la revendication 4, caractérisé en ce que le dispositif mélangeur (15) est constitué de surfaces de tourbillonnement rapportées.

6. Dispositif selon l'une au moins des revendications 1 à 5, caractérisé en ce que le capot de renvoi (16) est réalisé de manière à présenter une section d'écoulement correspondant à la section des réacteurs catalytiques (19a, 19b), et présente une longueur au moins égale au double de la largeur d'entrée.

7. Dispositif selon l'une au moins des revendications 1 à 6, caractérisé en ce que des canaux d'écoulement de retour (10a, 10b) pour le gaz purifié, sont réalisés à l'intérieur de l'échangeur de chaleur à plaques (4) de manière à ce qu'ils traversent celui-ci de façon rectiligne.
